# EUROPÄISCHE PATENTANMELDUNG

(11) **EP 4 717 955 A1**
(43) Veröffentlichungstag der Anmeldung: **01.04.2026**
(21) Anmeldenummer: 25199369.7
(22) Anmeldetag: 01.09.2025
(51) Int. Cl.: F16K 17/02, H01M 50/308, H01M 50/342, H05K 5/02, F16K 31/56, H01M 50/325, H01M 50/30

(54) **DRUCKAUSGLEICHSVORRICHTUNG UND EIN GEHÄUSE, DAS EINE SOLCHE DRUCKAUSGLEICHSVORRICHTUNG UMFASST**

(30) Priorität: 26.09.2024 DE 102024127889; 05.02.2025 DE 102025104226
(71) Anmelder: Carl Freudenberg KG, 69469 Weinheim (DE)
(72) Erfinder: Kleinke, Christian, 64297 Darmstadt (DE); Baur, Adrian, 68309 Mannheim (DE); Söndgen, Michael, 64625 Bensheim (DE); Naumann, Dr. Christoph, 68519 Viernheim (DE)

(57) **Zusammenfassung**

Druckausgleichsvorrichtung, umfassend ein Halteteil (1) mit einer Gasdurchtrittsöffnung (2) und eine Membran (3) aus einem gummielastischen Werkstoff, wobei die Membran (3) am Halteteil (1) gehalten ist und die Gasdurchtrittsöffnung (2) überdeckt, wobei die Membran (3) einerseits mit Umgebungsdruck (4) und andererseits mit auszugleichendem Druck (5) beaufschlagt ist, wobei die Membran (3) differenzdruckabhängig einen metastabilen ersten Zustand (6) und einen stabilen zweiten Zustand (7) aufweist und wobei die Membran (3) von einer Halteposition (8), in der sie die Gasdurchtrittsöffnung (2) dichtend überdeckt, metastabil ist und dichtend am Halteteil (1) gehalten ist in eine Öffnungsposition (9) schnappbar ist, in der sie stabil und vom Halteteil (1) gelöst ist und die Gasdurchtrittsöffnung (2) freigibt.

## Beschreibung

### Technisches Gebiet

Die Erfindung betrifft eine Druckausgleichsvorrichtung und ein Gehäuse, das eine solche Druckausgleichsvorrichtung umfasst.

### Stand der Technik

Aus der DE 10 2017 003 360 B3 ist eine Druckausgleichsvorrichtung für ein Gehäuse bekannt. Die vorbekannte Druckausgleichsvorrichtung weist eine Innenseite, eine Außenseite und einen Käfig auf, mit einer Gasdurchtrittsöffnung, wobei die Gasdurchtrittsöffnung die Innenseite und die Außenseite differenzdruckabhängig strömungsleitend verbindet. Die Gasdurchtrittsöffnung ist von einer gaspermeablen Membran überdeckt, der ein als Berstschutz ausgebildetes Überdruckventil in einer funktionstechnischen Parallelschaltung zugeordnet ist.

Eine weitere Druckausgleichvorrichtung ist aus der EP 2 545 882 A1 bekannt. Die Druckausgleichsvorrichtung ist zum Ausgleichen eines Innendrucks in einem Gehäuse vorgesehen, wobei innerhalb des Gehäuses eine elektrochemische Vorrichtung angeordnet ist. Eine gaspermeable Membran ist in Abhängigkeit von Änderungen des Innendrucks verformbar und besteht bevorzugt aus einem PTFE-Werkstoff. Die Membran ermöglicht im Normalfall einen Druckausgleich zwischen der Innenseite und der Außenseite. Im Fall eines unerwünscht hohen Innendrucks im Gehäuse wird die Membran durch einen als Notentgasungselement ausgebildeten Dorn zerstört. Die zerstörte Membran gibt eine Gasdurchtrittsöffnung für eine Notentgasung des Gehäuses frei. Dadurch ist ein Berstschutz für das Gehäuse gegeben.

### Darstellung der Erfindung

Der Erfindung liegt die Aufgabe zugrunde, eine Druckausgleichsvorrichtung derart weiterzuentwickeln, dass sie einen einfachen und teilearmen Aufbau aufweist, dadurch in fertigungstechnischer und wirtschaftlicher Hinsicht einfach und kostengünstig herstellbar ist und während einer langen Gebrauchsdauer zuverlässig funktioniert. Außerdem soll die Druckausgleichsvorrichtung einen sehr raschen Druckausgleich dadurch ermöglichen, dass sie von möglichst hohen Volumenströmen rasch durchströmbar ist.

Diese Aufgabe wird erfindungsgemäß durch eine Druckausgleichsvorrichtung mit den Merkmalen von Anspruch 1 gelöst.

Auf vorteilhafte Ausgestaltungen nehmen die auf Anspruch 1 direkt oder indirekt rückbezogenen Ansprüche Bezug.

Zur Lösung der Aufgabe ist eine Druckausgleichsvorrichtung vorgesehen, umfassend ein Halteteil mit einer Gasdurchtrittsöffnung und eine Membran aus einem gummielastischen Werkstoff, wobei die Membran am Halteteil gehalten ist und die Gasdurchtrittsöffnung überdeckt, wobei die Membran einerseits mit Umgebungsdruck und andererseits mit auszugleichendem Druck beaufschlagt ist, wobei die Membran differenzdruckabhängig einen metastabilen ersten Zustand und einen stabilen zweiten Zustand aufweist und wobei die Membran von einer Halteposition, in der sie die Gasdurchtrittsöffnung dichtend überdeckt, metastabil ist und dichtend am Halteteil gehalten ist, in eine Öffnungsposition schnappbar ist, in der sie stabil und vom Halteteil gelöst ist und die Gasdurchtrittsöffnung freigibt.

Der auszugleichende Druck ist der Druck, der zum Beispiel in einem Gehäuse herrscht, an dem die Druckausgleichsvorrichtung zur Anwendung gelangt. Der Umgebungsdruck kann Atmosphärendruck sein.

Die Druckausgleichsvorrichtung kann für ein Gehäuse vorgesehen und in einer Gehäusewand des Gehäuses montiert und/oder in einem Deckel für das Gehäuse integriert sein. Die Druckausgleichsvorrichtung hat den Vorteil, dass der Druckausgleich sehr rasch durch hohe Volumenströme erfolgt, ausschließlich mittels der schnappbaren Membran. Dadurch hat die Druckausgleichsvorrichtung einen besonders teilearmen und einfachen Aufbau und ist deshalb fertigungstechnisch einfach und kostengünstig herstellbar. Insbesondere garantiert die Druckausgleichsvorrichtung nur geringe Schwankungen im Auslösedruck.

Der Druckausgleich erfolgt zerstörungsfrei.

Das bedeutet auch, dass die Druckausgleichsvorrichtung zu 100 % getestet werden kann.

Ein solcher 100 %-iger Test ist möglich, weil in der Druckausgleichsvorrichtung während ihrer bestimmungsgemäßen Verwendung kein Material zerstört wird.

Insbesondere gelangen keine Berstfolien, die oftmals erheblichen Alterungseffekten unterliegen, zur Anwendung.

Während ihrer Fertigung kann die Druckausgleichsvorrichtung einem Funktionstest unterzogen werden, bei dem die Membran bis zum Schnappen in die Öffnungsposition belastet wird. Der Differenzdruck beim Übergang der Membran vom metastabilen ersten Zustand in den stabilen zweiten Zustand kann dabei gemessen werden. Sollte dieser im vorgegebenen Toleranzfeld liegen, kann die Membran, weil der Übergang zerstörungsfrei erfolgt, anschließend wieder in die Druckausgleichsvorrichtung eingebaut und in den metastabilen ersten Zustand versetzt werden, bevor das Bauteil anschließend gebrauchsfertig verpackt und versendet wird.

Zur Funktion der Druckausgleichsvorrichtung wird Folgendes ausgeführt:
Die Membran ist differenzdruckabhängig betätigbar und weist einen metastabilen ersten Zustand und einen stabilen zweiten Zustand auf.

Die Metastabilität ist eine schwache Form der Stabilität. Der metastabile erste Zustand ist gegen kleinere Änderungen des Differenzdrucks an der Membran stabil, jedoch instabil gegenüber größeren Änderungen.

Erst bei während der Konstruktion der Druckausgleichsvorrichtung festgelegten größeren Differenzdrücken an der Membran schnappt diese von ihrem metastabilen ersten Zustand in ihren stabilen zweiten Zustand.

Einen metastabilen und einen stabilen Zustand weisen auch sogenannte Twist-Off-Schraubdeckel auf. Durch einen Unterdruck im Behälter, der durch die Twist-Off-Schraubdeckel verschlossen ist, wird der nach Art eines Knackfroschs ausgebildete Mittelteil des Twist-Off-Schraubdeckels in einem metastabilen Zustand gehalten. Strömt beim Öffnen des Twist-Off-Schraubdeckels Luft in den zuvor verschlossenen Behälter, schnappt der Mittelteil des Deckels in seinen stabilen, herstellungsbedingten Zustand zurück.

Der gummielastische Werkstoff, aus dem die Membran besteht, ist gasundurchlässig. Dadurch ist von Vorteil, dass Differenzdrücke an der Membran praktisch verzögerungsfrei anliegen und unmittelbar deren Betätigung bewirken. Der auszugleichende Druck kann durch die gummielastische und gasundurchlässige Membran nicht entweichen.

Gemäß einer vorteilhaften Ausgestaltung kann es vorgesehen sein, dass die Membran im metastabilen ersten Zustand eine in Richtung des auszugleichenden Drucks vorgewölbte erste Gestalt aufweist. Die Membran wird dadurch unterhalb eines Differenzdruck-Schwellwerts in ihrer ersten Gestalt gehalten.

Die erste Gestalt kann im Wesentlichen linsenförmig sein.

Demgegenüber weist die Membran im stabilen zweiten Zustand bevorzugt eine entgegen dem auszugleichenden Druck vorgewölbte zweite Gestalt auf.

Die zweite Gestalt kann im Wesentlichen halbkugelförmig sein.

Während eines Druckanstiegs im Inneren eines Gehäuses, beispielsweise eines Batteriegehäuses, der in einem unkritischen Bereich liegt, wird die Membran in ihrem metastabilen ersten Zustand in der Halteposition gehalten, in der sie die Gasdurchtrittsöffnung dichtend überdeckt. Dabei ist die Membran dichtend am Halteteil gehalten.

Bei weiterem Druckanstieg im Inneren des Gehäuses wird dann ein kritischer Schwellwert erreicht, bei dem die Membran von ihrem metastabilen ersten Zustand in den stabilen zweiten Zustand und damit in die Öffnungsposition schnappt. In der Öffnungsposition ist sie vom Halteteil gelöst und gibt die Gasdurchtrittsöffnung frei.

Das Umschnappen vom metastabilen ersten Zustand in den stabilen zweiten Zustand erfolgt praktisch schlagartig, so dass innerhalb kürzester Zeit ein größtmöglicher Durchtrittsquerschnitt durch die Gasdurchtrittsöffnung freigegeben wird. Der Differenzdruck wird dadurch schnellstmöglich ausgeglichen, so dass eine Gefahr einer Beschädigung des Gehäuses, an dem die Druckausgleichvorrichtung zur Anwendung gelangt, auf ein Minimum begrenzt ist.

Die Ausgestaltung des Druckausgleichselements bietet außerdem den Vorteil, dass größere Fertigungstoleranzen bei der Herstellung der Druckausgleichsvorrichtung nur wenig Einfluss auf die Gebrauchseigenschaften der Druckausgleichsvorrichtung haben.

Das Zulassen größerer Fertigungstoleranzen bedeutet geringere Herstellkosten.

Durch die schnappbare Membran gibt es keine weiteren Toleranzverkettungen mit anderen Bauteilen der Druckausgleichsvorrichtung, wie zum Beispiel mit dem Halteteil.

Das ist darauf zurückzuführen, dass die Membran beim Schnappen aus dem metastabilen in den stabilen Zustand eine im Vergleich zu den Fertigungstoleranzen der Membran wesentlich größere Verschiebung erfährt. Diese Verschiebung liegt häufig bei einem Vielfachen der Fertigungstoleranzen. Dadurch wird eine gute Funktionssicherheit der Druckausgleichsvorrichtung, insbesondere der Membran beim Schnappen, gewährleistet.

Um definierte Gebrauchseigenschaften, insbesondere ein definiertes Umschnappen der Membran aus dem metastabilen ersten Zustand in den stabilen zweiten Zustand zu gewährleisten, kann der Membran auf der dem abzudichtenden Druck zugewandten Seite ein gaspermeable Stützkörper zugeordnet sein, den die Membran in ihrem metastabilen ersten Zustand anliegend berührt. Die Stützwirkung des Stützkörpers ist von Vorteil, um unerwünscht große, gebrauchsdauerverringernde Verformungen der Membran aus gummielastischem Werkstoff in ihrem metastabilen ersten Zustand zu vermeiden. Dadurch weist die Druckausgleichsvorrichtung gleichbleibend gute Gebrauchseigenschaften während einer langen Gebrauchsdauer auf. Außerdem ist ein Stützkörper insbesondere dann von Vorteil, wenn der gummielastische Werkstoff der Membran biegeschlaff ist.

Der Stützkörper kann als Stützgitter ausgebildet sein. Dadurch wird einerseits die gummielastische Membran gestützt und deren Beaufschlagung mit auszugleichendem Druck nicht behindert.

Hinsichtlich einer einfachen und kostengünstigen Herstellbarkeit der Druckausgleichsvorrichtung kann es vorgesehen sein, dass der Stützkörper einstückig und materialeinheitlich mit dem Halteteil ausgebildet ist. Die Druckausgleichsvorrichtung weist dadurch insgesamt einen teilearmen Aufbau auf.

Die Membran kann einen gaspermeablen Zentralbereich umschließen. Die Membran bildet ein als Berstschutz ausgebildetes Überdruckventil, wobei die Membran und der gaspermeable Zentralbereich in einer funktionstechnischen Parallelschaltung angeordnet sind. Der gaspermeable Zentralbereich kann beispielsweise aus e-PTFE oder aus einem Vliesstoff-Verbundteil bestehen, das zumindest eine Vliesstofflage umfasst. Der gaspermeable Zentralbereich bildet einen atmungsaktiven Membranteil. Der gaspermeable Zentralbereich überdeckt dabei eine zentrale Öffnung in der Membran aus gummielastischem Werkstoff und verschließt diese dadurch.

Der gummielastische Werkstoff ist nicht-gaspermeabel.

Die Druckausgleichsvorrichtung hat in einem solchen Fall zusätzlich eine Be- und Entlüftung im normalen Betrieb, wie bei der eingangs beschriebenen Druckausgleichsvorrichtung aus der DE 10 2017 003 360 B3.

Nach einer vorteilhaften Ausgestaltung kann es vorgesehen sein, dass der Zentralbereich ein koaxial und dichtend in der Membran angeordnetes, ringförmiges Halteelement mit einer Ausnehmung aufweist, wobei die Ausnehmung von einer gaspermeablen Zentralmembran überdeckt ist. Mittels des Halteelements wird die Zentralmembran mit dem gummielastischen Werkstoff verbunden. Das Halteelement und die Zentralmembran können eine vormontierbare Einheit bilden. Die Montage der Druckausgleichsvorrichtung ist dadurch vereinfacht.

Das Halteelement kann bevorzugt aus einem zähharten Werkstoff bestehen. Als Werkstoff kann bevorzugt ein polymerer Werkstoff zur Anwendung gelangen.

Das Halteelement ist vom gummielastischen Werkstoff der Membran dichtend umschlossen und mit dem gummielastischen Werkstoff der Membran form- und/oder stoffschlüssig verbunden. Durch die gasdichte Verbindung zwischen dem Halteelement und dem gummielastischen Werkstoff der Membran wird ein für die Gebrauchseigenschaften nachteiliger Strömungskurzschluss in diesem Bereich während der bestimmungsgemäßen Verwendung der Druckausgleichsvorrichtung verhindert. Änderungen des Differenzdrucks an der Membran bewirken dadurch eine unmittelbare Reaktion der Membran.

Die Zentralmembran kann aus e-PTFE oder einem Vliesstoffverbund bestehen, der zumindest eine Vliesstofflage umfasst. Ein Vliesstoffverbund weist einerseits eine gute Gaspermeabilität auf und andererseits ist durch die Zentralmembran das Innere eines Gehäuses, an dem die Druckausgleichsrichtung zur Anwendung gelangen, vor einer Beaufschlagung mit Feuchtigkeit und/oder Verunreinigungen geschützt.

Die Zentralmembran kann auf ihrer dem auszugleichenden Druck abgewandten Seite von einem gitterförmigen Schutzdeckel überdeckt sein. Die im Vergleich zum gummielastischen Werkstoff der Membran empfindlichere Zentralmembran wird dadurch vor gebrauchsdauerverringernden äußeren Einflüssen geschützt.

Bevorzugt erfolgt die Befestigung des Schutzdeckels am Halteelement. Diese beiden Bauteile sind räumlich nahe zueinander positioniert, sodass deren Festlegung aneinander konstruktiv vorteilhaft ist.

Die Membran kann von einem kuppel- und gitterförmigen Auffangdeckel für die Membran in ihrer Öffnungsposition überdeckt sein. Hierbei ist von Vorteil, dass die Membran, wenn sie zum Ausgleich unerwünscht hoher Differenzdrücke an der Membran vom Halteteil weggeschleudert wird, nicht unkontrolliert in die Umgebung gelangt, sondern durch den Auffangdeckel innerhalb der Druckausgleichsvorrichtung gehalten wird.

Der Auffangdeckel kann Be- und Entlüftungsöffnungen aufweisen. Dadurch gelangt der auszugleichende Überdruck ungehindert in die Umgebung.

Der Auffangdeckel ist bevorzugt am Halteteil oder am Stützkörper festgelegt. Eine solche Festlegung ist konstruktiv einfach, ebenso wie die Montage der Druckausgleichsvorrichtung, insbesondere die Montage des Auffangdeckels am Halteteil.

Der Auffangdeckel und das Halteteil oder der Stützkörper können in axialer Richtung relativ verschieblich miteinander verbunden sein. Hierbei ist von Vorteil, dass für die Abfuhr des auszugleichenden Drucks eine vergrößerte nutzbare Fläche der Be- und Entlüftungsöffnungen des Auffangdeckels freigegeben wird.

Die Membran kann in ihrer Öffnungsposition vollständig vom Halteteil gelöst sein.

Für einen raschen Druckausgleich durch hohe Volumenströme wird die Membran vom Halteteil geschleudert.

Außerdem betrifft die Erfindung ein Gehäuse, umfassend eine Druckausgleichsvorrichtung, wie zuvor beschrieben und zumindest eine Begrenzungswand, die den Innenraum des Gehäuses begrenzt und von der Umgebung des Gehäuses trennt, wobei in der Begrenzungswand zumindest eine gaspermeable Gehäusemembran angeordnet ist und wobei die Membran mit der Zentralmembran und/oder der Gehäusemembran in einer funktionstechnischen Parallelschaltung angeordnet ist.

Während der bestimmungsgemäßen Verwendung des Gehäuses findet ein Druckausgleich durch die Zentralmembran und/oder die Gehäusemembran, die jeweils gaspermeabel sind, statt. Wird an der Membran ein Differenzdruck erreicht, der oberhalb eines noch zulässigen Schwellwerts liegt, öffnet die Membran aus elastomerem Werkstoff, wie zuvor beschrieben.

### Kurzbeschreibung der Zeichnung

Vier Ausführungsbeispiele von erfindungsgemäßen Druckausgleichsvorrichtungen werden nachfolgend anhand der Figuren 1 bis 10 näher erläutert.

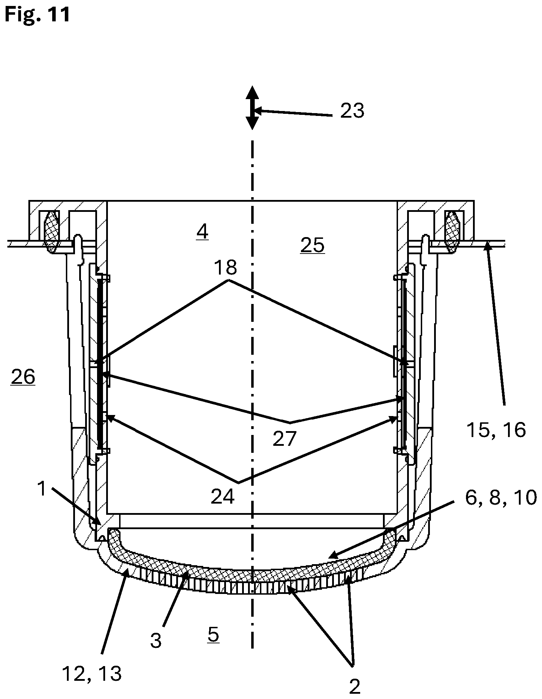

In Figur 11 ist ein Gehäuse gezeigt, das eine der zuvor gezeigten Druckausgleichsvorrichtungen umfasst,

Diese zeigen jeweils in schematischer Darstellung:
- Figur 1: ein erstes Ausführungsbeispiel der Druckausgleichsvorrichtung während ihrer bestimmungsgemäßen Verwendung in einem Betriebszustand, in dem kein oder nur ein sehr geringer Differenzdruck an der Membran anliegt,
- Figur 2: einen Betriebszustand der Druckausgleichsvorrichtung aus Figur 1, in dem sich innerhalb eines Gehäuses ein auszugleichender Druck aufbaut und die Membran differenzdruckabhängig aus ihrem metastabilen ersten Zustand in den stabilen zweiten Zustand bewegt wird,
- Figur 3: die Druckausgleichsvorrichtung aus den Figuren 1 und 2, wobei die Gasdurchtrittsöffnung vollständig geöffnet und ein vollständiger Druckausgleich erfolgt ist. Die Membran ist in ihrer Öffnungsposition und vollständig vom Halteteil gelöst,
- Figur 4: ein zweites Ausführungsbeispiel der Druckausgleichsvorrichtung, ähnlich dem Ausführungsbeispiel aus Figur 1, wobei die Membran einen gaspermeablen Zentralbereich aufweist,
- Figur 5: ein drittes Ausführungsbeispiel der Druckausgleichsvorrichtung, ähnlich dem Ausführungsbeispiel aus Figur 1, wobei die Membran von einem Auffangdeckel überdeckt ist,
- Figur 6: das dritte Ausführungsbeispiel aus Figur 5 in einem Betriebszustand der Druckausgleichsvorrichtung, in dem sich innerhalb eines Gehäuses ein auszugleichender Druck aufbaut und die Membran differenzdruckabhängig aus ihrem metastabilen ersten Zustand in den stabilen zweiten Zustand bewegt, wird,
- Figur 7: das dritte Ausführungsbeispiel aus den Figuren 5 und 6, wobei die Gasdurchtrittsöffnung vollständig geöffnet und ein vollständiger Druckausgleich erfolgt ist. Die Membran ist in ihrer Öffnungsposition, vollständig vom Halteteil gelöst und innerhalb des Auffangdeckels aufgefangen,
- Figur 8: ein viertes Ausführungsbeispiel der Druckausgleichsvorrichtung, ähnlich dem dritten Ausführungsbeispiel aus Figur 5, wobei die Membran einen gaspermeablen Zentralbereich aufweist, wie das zweite Ausführungsbeispiel aus Figur 4,
- Figur 9: das vierte Ausführungsbeispiel aus Figur 8 in einen Betriebszustand der Druckausgleichsvorrichtung, in dem sich innerhalb eines Gehäuses ein auszugleichender Druck aufbaut und die Membran differenzdruckabhängig aus ihrem metastabilen ersten Zustand in den stabilen zweiten Zustand bewegt,
- Figur 10: die Druckausgleichsvorrichtung aus den Figuren 8 und 9, wobei die Gasdurchtrittsöffnung vollständig geöffnet und ein vollständiger Druckausgleich erfolgt ist. Die Membran ist in ihrer Öffnungsposition, vollständig vom Halteteil gelöst und innerhalb des Auffangdeckels aufgefangen.
- Figur 11: ein Gehäuse, das eine der Druckausgleichsvorrichtungen aus den Figuren 1 bis 10 umfasst.

### Ausführung der Erfindung

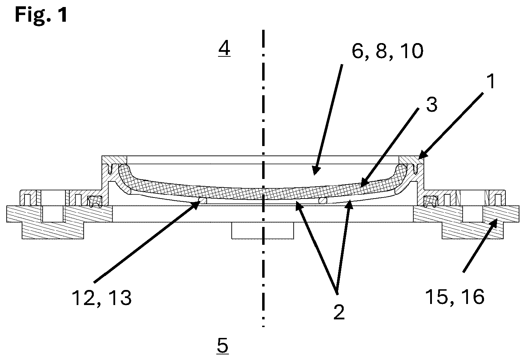

**In** den Figuren 1 bis 3 ist ein erstes Ausführungsbeispiel einer Druckausgleichsvorrichtung gezeigt.

Die Druckausgleichsvorrichtung ist Bestandteil einer Anordnung, die zusätzlich zur Druckausgleichsvorrichtung ein Gehäuse 15, hier ein Batteriegehäuse 16 umfasst. Die Druckausgleichsvorrichtung und das Gehäuse 15 können durch übliche Verbindungen miteinander verbunden sein. Beispielsweise kann die Verbindung durch eine Schraub- oder eine Bajonette-Verbindung erfolgen.

Die Druckausgleichsvorrichtung umfasst das Halteteil 1, das aus einem zähharten Werkstoff, beispielsweise aus einem polymeren Werkstoff, besteht. Das Halteteil 1 weist die zentral angeordnete Gasdurchtrittsöffnung 2 auf, die von der Membran 3 aus gummielastischem Werkstoff überdeckt ist.

**In** Figur 1 ist die Anordnung während ihrer bestimmungsgemäßen Verwendung gezeigt, wobei an der Membran 3, wie hier dargestellt, kein Differenzdruck anliegt.

Die Membran 3 ist dichtend am Halteteil 1 gehalten, wobei die Membran 3 außenseitig mit Umgebungsdruck 4 und innenseitig mit dem auszugleichenden Druck 5 beaufschlagt ist. Der Zustand, in dem sich die Membran 3 im gezeigten Betriebszustand befindet, ist der metastabile erste Zustand 6.

Die Membran 3 weist im gezeigten metastabilen ersten Zustand 6 eine in Richtung des auszugleichenden Drucks 5 vorgewölbte erste Gestalt 10 auf, sie ist also im Wesentlichen linsenförmig in Richtung des auszugleichenden Drucks 5 vorgewölbt.

Dabei stützt sie sich auf der dem auszugleichenden Druck 5 zugewandten Seite am Stützkörper 12 ab, der gaspermeabel und als Stützgitter 13 ausgebildet ist.

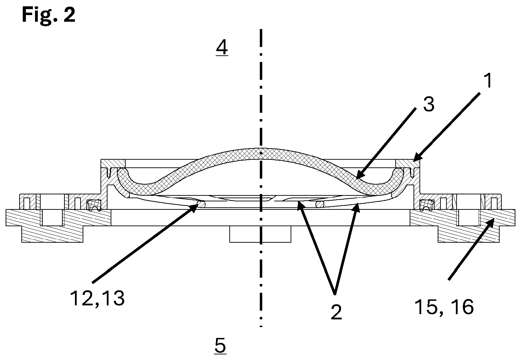

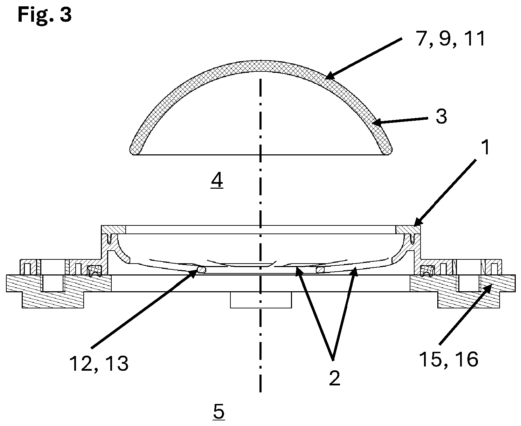

In Figur 2 ist der auszugleichende Druck 5, im Vergleich zum Betriebszustand, der in Figur 1 gezeigt ist, erhöht und baut sich auf. Durch den zunehmenden Differenzdruck an der Membran wird diese vom metastabilen ersten Zustand 6, der in Figur 1 gezeigt ist, in den stabilen zweiten Zustand 7 bewegt, der in Figur 3 gezeigt ist.

In Figur 2 ist die Membran 3 noch dichtend mit dem Halteteil 1 verbunden, jedoch schon in Richtung stabiler zweiter Zustand 7 elastisch verformt. In der gezeigten Position der Membran 3 schnappt diese von der Halteposition 8 in die Öffnungsposition 9, die in Figur 3 gezeigt ist.

In Figur 3 ist die Membran 3 in ihrer Öffnungsposition 9 gezeigt und befindet sich im stabilen zweiten Zustand 7. Sie ist komplett vom Halteteil 1 gelöst und gibt die Gasdurchtrittsöffnung 2 vollständig frei.

Die Membran 3 befindet sich im stabilen zweiten Zustand 7, der dem herstellungsbedingten Zustand der Membran 3 entspricht. Die zweite Gestalt 11 ist im Wesentlichen halbkugelförmig.

In Abhängigkeit von den jeweiligen Gegebenheiten des Anwendungsfalls kann die Membran 3 einen gaspermeablen Zentralbereich 14 aufweisen, der vom gummielastischen und nicht-gaspermeablen Werkstoff umschlossen ist.

Der Stützkörper 12, an dem die Membran 3 im Betriebszustand, der in Figur 1 gezeigt ist, unter elastischer Vorspannung anliegt, ist einstückig und materialeinheitlich mit dem Halteteil 1 ausgebildet.

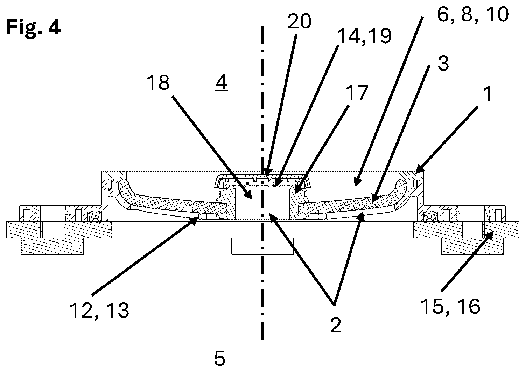

In Figur 4 ist ein zweites Ausführungsbeispiel der Druckausgleichsvorrichtung, ähnlich dem ersten Ausführungsbeispiel aus Figur 1 gezeigt, wobei die Membran 3 einen gaspermeablen Zentralbereich 14 aufweist.

Die Anordnung ist während ihrer bestimmungsgemäßen Verwendung gezeigt, wobei an der Membran 3, wie hier dargestellt, kein Differenzdruck anliegt.

Die Membran 3 ist dichtend am Halteteil 1 gehalten, wobei die Membran 3 außenseitig mit Umgebungsdruck 4 und innenseitig mit dem auszugleichenden Druck 5 beaufschlagt ist. Der Zustand, in dem sich die Membran 3 im gezeigten Betriebszustand befindet, ist der metastabile erste Zustand 6.

Die Membran 3 weist im gezeigten metastabilen ersten Zustand 6 eine in Richtung des auszugleichenden Drucks 5 vorgewölbte erste Gestalt 10 auf, sie ist also im Wesentlichen linsenförmig in Richtung des auszugleichenden Drucks 5 vorgewölbt.

Dabei stützt sie sich auf der dem auszugleichenden Druck 5 zugewandten Seite am Stützkörper 12 ab, der gaspermeabel und als Stützgitter 13 ausgebildet ist.

Der Zentralbereich 14 umfasst ein koaxial und dichtend in der Membran 3 angeordnetes, ringförmiges Halteelement 17 mit einer Ausnehmung 18 auf, wobei die Ausnehmung 18 von der gaspermeablen Zentralmembran 19 überdeckt ist. Durch die gaspermeable Zentralmembran 19 ist eine strömungsleitende Verbindung zwischen der Innenseite des Gehäuses 15 mit dem auszugleichenden Druck 5 und der Umgebung der

Druckausgleichsvorrichtung gegeben, wobei in der Umgebung der Umgebungsdruck 4 herrscht. Mittels des Halteelements 17 wird die

Zentralmembran 19 mit dem gummielastischen Werkstoff verbunden. Das Halteelement 17 und die Zentralmembran 19 bilden eine vormontierte Einheit.

Das Halteelement 17 besteht aus einem zähharten polymeren Werkstoff.

Das Halteelement 17 ist vom gummielastischen Werkstoff der Membran 13 dichtend umschlossen und mit dem gummielastischen Werkstoff der Membran 3 form- und/oder stoffschlüssig verbunden. Durch die gasdichte Verbindung wird ein für die Gebrauchseigenschaften nachteiliger Strömungskurzschluss während der bestimmungsgemäßen Verwendung der Druckausgleichsvorrichtung verhindert. Änderungen des Differenzdrucks an der Membran 3 bewirken dadurch eine unmittelbare Reaktion der Membran.

Die Zentralmembran 19 besteht in diesem Ausführungsbeispiel aus einem Vliesstoffverbund, der zumindest eine Vliesstofflage umfasst. Ein Vliesstoffverbund weist einerseits eine gute Gaspermeabilität auf, und andererseits ist durch die Zentralmembran das Innere des Gehäuses 15, an dem die Druckausgleichsrichtung zur Anwendung gelangen, vor einer Beaufschlagung mit Feuchtigkeit und/oder Verunreinigungen geschützt.

Die Zentralmembran 19 ist auf ihrer dem auszugleichenden Druck 5 abgewandten Seite von dem gitterförmigen Schutzdeckel 20 überdeckt. Auch der Schutzdeckel 20 besteht aus einem polymeren Werkstoff. Die im Vergleich zum gummielastischen Werkstoff der Membran 3 empfindlichere Zentralmembran 19 wird dadurch vor gebrauchsdauerverringernden äußeren Einflüssen geschützt.

Der Schutzdeckel 20 ist am Halteelement 17 befestigt.

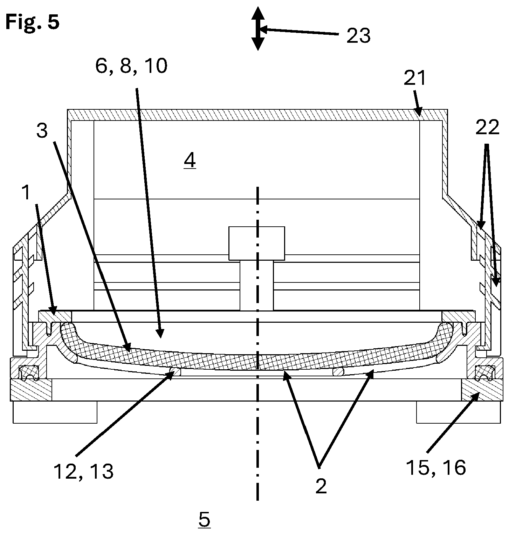

In Figur 5 ist ein drittes Ausführungsbeispiel der Druckausgleichsvorrichtung gezeigt, ähnlich dem Ausführungsbeispiel aus Figur 1, wobei die Membran 3 vom Auffangdeckel 21 überdeckt ist.

Der Auffangdeckel 21 ist kuppel- und gitterförmig ausgebildet und fängt die Membran 3, wenn sie in der Öffnungsposition 9 vom Halteteil 1 vollständig abgehoben ist. Hierbei ist von Vorteil, dass die Membran 3, wenn sie zum Ausgleich unerwünscht hoher Differenzdrücke an der Membran 3 vom Halteteil 1 weggeschleudert wird, nicht unkontrolliert in die Umgebung gelangt, sondern durch den Auffangdeckel 21 innerhalb der Druckausgleichsvorrichtung gehalten wird.

Der Auffangdeckel 21 weist Be- und Entlüftungsöffnungen 22 auf. Dadurch kann der auszugleichende Überdruck 5 ungehindert in die Umgebung 4 gelangen.

Der Auffangdeckel 21 ist am Halteteil 1 in axialer Richtung 23 verschieblich festgelegt. Eine solche Festlegung ist konstruktiv vorteilhaft, ebenso wie die Montage der Druckausgleichsvorrichtung, insbesondere die Montage des Auffangdeckels 21 am Halteteil 1.

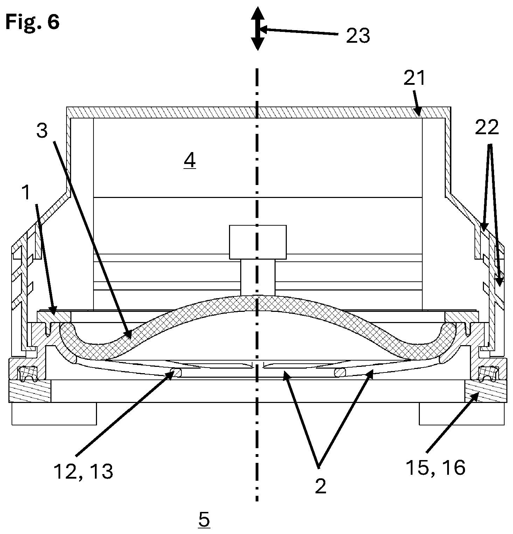

Figur 6 ist das dritte Ausführungsbeispiel aus Figur 5 in einem Betriebszustand gezeigt, in dem sich innerhalb des Gehäuses 15 ein auszugleichender Druck 5 aufbaut und die Membran 3 differenzdruckabhängig aus ihrem metastabilen ersten Zustand 6 in den stabilen zweiten Zustand 7 bewegt.

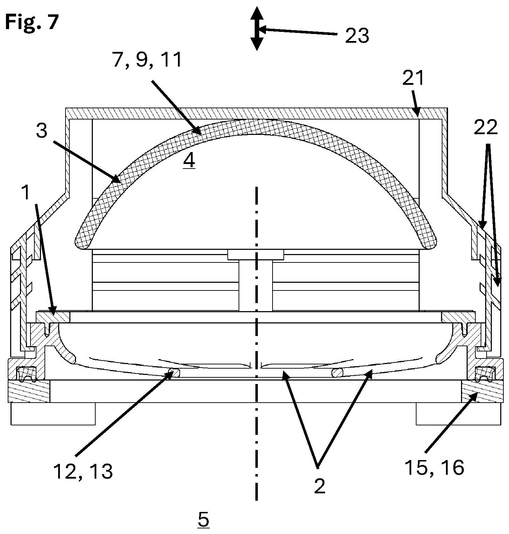

Figur 7 zeigt das dritte Ausführungsbeispiel aus den Figuren 5 und 6, wobei die Gasdurchtrittsöffnung 2 vollständig geöffnet ist und ein vollständiger Druckausgleich erfolgt ist. Die Membran 3 ist in ihrer Öffnungsposition 9 und vollständig vom Halteteil 1 gelöst.

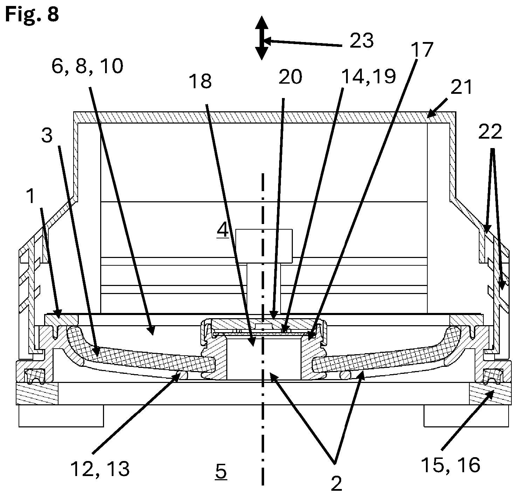

Figur 8 ist ein viertes Ausführungsbeispiel der Druckausgleichsvorrichtung gezeigt, ähnlich dem Ausführungsbeispiel aus Figur 5, wobei die Membran 3 den gaspermeablen Zentralbereich 14 mit der Zentralmembran 19 umfasst.

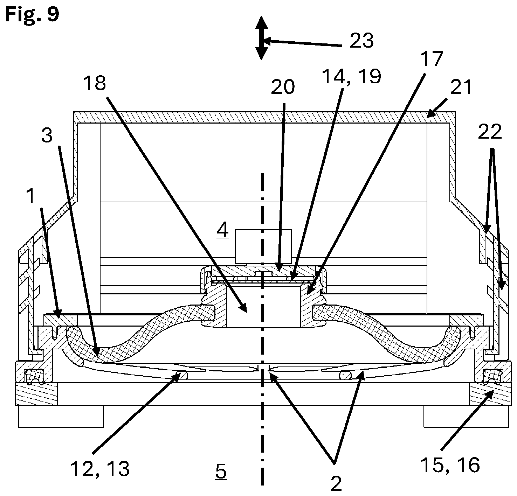

Figur 9 zeigt das vierte Ausführungsbeispiel aus Figur 8 in einem Betriebszustand der Druckausgleichsvorrichtung, in dem sich innerhalb des Gehäuses 15 ein auszugleichender Druck 5 aufbaut und die Membran 3 differenzdruckabhängig aus ihrem metastabilen ersten Zustand 6 in den stabilen zweiten Zustand 7 bewegt.

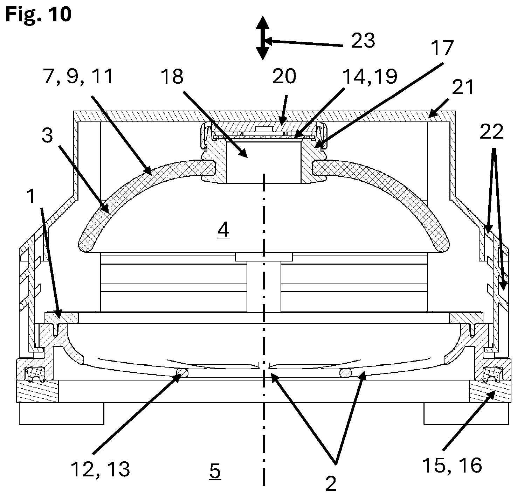

Figur 10 zeigt die Druckausgleichsvorrichtung aus den Figuren 8 und 9, wobei die Gasdurchtrittsöffnung 2 vollständig geöffnet und ein vollständiger Druckausgleich erfolgt ist. Die Membran 3 ist in ihrer Öffnungsposition 9 und vollständig vom Halteteil 1 gelöst.

Die Druckausgleichsvorrichtung, jedoch auch die gesamte Anordnung, die die Druckausgleichsvorrichtung umfasst, weist einen teilearmen und einfachen Aufbau auf und ist dadurch in wirtschaftlicher Hinsicht kostengünstig herstellbar. Die Druckausgleichsvorrichtung weist gleichbleibend gute Gebrauchseigenschaften während einer langen Gebrauchsdauer auf.

In Figur 11 ist ein Gehäuse 15, 16 gezeigt, umfassend eine Druckausgleichsvorrichtung, wie zuvor beschrieben. Das Gehäuse 15, 16 umfasst eine Begrenzungswand 24, die den Innenraum 25 des Gehäuses 15, 16 begrenzt und von der Umgebung 26 des Gehäuses 15, 16 trennt. In der Begrenzungswand ist zumindest eine gaspermeable Gehäusemembran 27 angeordnet. Die Membran 3 ist im gezeigten Ausführungsbeispiel mit der Gehäusemembran 27 in einer funktionstechnischen Parallelschaltung angeordnet. Während der bestimmungsgemäßen Verwendung des Gehäuses 15, 16 findet ein Druckausgleich durch die Gehäusemembran 27 statt, die gaspermeabel ist. Wird demgegenüber an der gasundurchlässigen Elastomer-Membran 3 ein Differenzdruck erreicht, der oberhalb eines noch zulässigen Schwellwerts liegt, öffnet die Membran 3 im Sinne eines Überdruckventils, wie zuvor beschrieben, um eine Beschädigung/Zerstörung des Gehäuses 15, 16 zu verhindern.

## Patentansprüche

1. Druckausgleichsvorrichtung, umfassend ein Halteteil (1) mit einer Gasdurchtrittsöffnung (2) und eine Membran (3) aus einem gummielastischen Werkstoff, wobei die Membran (3) am Halteteil (1) gehalten ist und die Gasdurchtrittsöffnung (2) überdeckt, wobei die Membran (3) einerseits mit Umgebungsdruck (4) und andererseits mit auszugleichendem Druck (5) beaufschlagt ist, wobei die Membran (3) differenzdruckabhängig einen metastabilen ersten Zustand (6) und einen stabilen zweiten Zustand (7) aufweist und wobei die Membran (3) von einer Halteposition (8), in der sie die Gasdurchtrittsöffnung (2) dichtend überdeckt, metastabil ist und dichtend am Halteteil (1) gehalten ist, in eine Öffnungsposition (9) schnappbar ist, in der sie stabil und vom Halteteil (1) gelöst ist und die Gasdurchtrittsöffnung (2) freigibt.

2. Druckausgleichsvorrichtung nach Anspruch 1, **dadurch gekennzeichnet, dass** die Membran (3) gasundurchlässig ist.

3. Druckausgleichsvorrichtung nach einem der Ansprüche 1 oder 2, **dadurch gekennzeichnet, dass** die Membran (3) im metastabilen ersten Zustand (6) eine in Richtung des auszugleichenden Drucks (5) vorgewölbte erste Gestalt (10) aufweist.

4. Druckausgleichsvorrichtung nach Anspruch 3, **dadurch gekennzeichnet, dass** die erste Gestalt (10) im Wesentlichen linsenförmig ist.

5. Druckausgleichsvorrichtung nach einem der Ansprüche 1 bis 4, **dadurch gekennzeichnet, dass** die Membran (3) im stabilen zweiten Zustand (7) eine entgegen dem auszugleichenden Druck vorgewölbte zweite Gestalt (11) aufweist.

6. Druckausgleichsvorrichtung nach Anspruch 5, **dadurch gekennzeichnet, dass** die zweite Gestalt (11) im Wesentlichen halbkugelförmig ist.

7. Druckausgleichsvorrichtung nach einem der Ansprüche 1 bis 6, **dadurch gekennzeichnet, dass** der Membran (3) auf der dem auszugleichenden Druck (5) zugewandten Seite ein gaspermeabler Stützkörper (12) zugeordnet ist, den die Membran (3) in ihrem metastabilen ersten Zustand (6) anliegend berührt.

8. Druckausgleichsvorrichtung nach Anspruch 7, **dadurch gekennzeichnet, dass** der Stützkörper (12) als Stützgitter (13) ausgebildet ist.

9. Druckausgleichsvorrichtung nach einem der Ansprüche 7 oder 8, **dadurch gekennzeichnet, dass** der Stützkörper (12) einstückig und materialeinheitlich mit dem Halteteil (1) ausgebildet ist.

10. Druckausgleichsvorrichtung nach einem der Ansprüche 1 bis 7, **dadurch gekennzeichnet, dass** die Membran (3) einen gaspermeablen Zentralbereich (14) umschließt.

11. Druckausgleichsvorrichtung nach Anspruch 10, **dadurch gekennzeichnet, dass** der Zentralbereich (14) ein koaxial und dichtend in der Membran (3) angeordnetes, ringförmiges Halteelement (17) mit einer Ausnehmung (18) aufweist und dass die Ausnehmung (18) von einer gaspermeablen Zentralmembran (19) überdeckt ist.

12. Druckausgleichsvorrichtung nach Anspruch 11, **dadurch gekennzeichnet, dass** das Halteelement (17) aus einem zähharten Werkstoff besteht.

13. Druckausgleichsvorrichtung nach einem der Ansprüche 11 oder 12, **dadurch gekennzeichnet, dass** das Halteelement (17) vom gummielastischen Werkstoff der Membran (3) dichtend umschlossen ist und mit dem gummielastischen Werkstoff der Membran (3) form- und/oder stoffschlüssig verbunden ist.

14. Druckausgleichsvorrichtung nach einem der Ansprüche 11 bis 13, **dadurch gekennzeichnet, dass** die Zentralmembran (19) aus e-PTFE oder einem Vliesstoffverbund besteht, der zumindest eine Vliesstofflage umfasst.

15. Druckausgleichsvorrichtung nach einem der Ansprüche 11 bis 14, **dadurch gekennzeichnet, dass** die Zentralmembran (19) auf ihrer dem auszugleichenden Druck (5) abgewandten Seite von einem gitterförmigen Schutzdeckel (20) überdeckt ist.

16. Druckausgleichsvorrichtung nach Anspruch 15, **dadurch gekennzeichnet, dass** der Schutzdeckel (20) am Halteelement (17) festgelegt ist.

17. Druckausgleichsvorrichtung nach einem der Ansprüche 1 bis 16, **dadurch gekennzeichnet, dass** die Membran (3) von einem kuppel- und gitterförmigen Auffangdeckel (21) für die Membran (3) in der Öffnungsposition (9) überdeckt ist.

18. Druckausgleichsvorrichtung nach einem der Ansprüche 1 bis 17, **dadurch gekennzeichnet, dass** der Auffangdeckel (21) Be- und Entlüftungsöffnungen (22) aufweist.

19. Druckausgleichsvorrichtung nach einem der Ansprüche 1 bis 18, **dadurch gekennzeichnet, dass** der Auffangdeckel (21) am Halteteil (1) oder am Stützkörper (12) festgelegt ist.

20. Druckausgleichsvorrichtung nach einem der Ansprüche 1 bis 19, **dadurch gekennzeichnet, dass** der Auffangdeckel (21) und das Halteteil (1) oder der Stützkörper (12) in axialer Richtung (23) relativ verschieblich miteinander verbunden sind.

21. Druckausgleichsvorrichtung nach einem der Ansprüche 1 bis 20, **dadurch gekennzeichnet, dass** die Membran (3) in ihrer Öffnungsposition (9) vollständig vom Halteteil (1) gelöst ist.

22. Gehäuse, umfassend eine Druckausgleichsvorrichtung nach einem der Ansprüche 1 bis 21 und zumindest eine Begrenzungswand (24), die den Innenraum (25) des Gehäuses (15, 16) begrenzt und von der Umgebung (26) des Gehäuses (15, 16) trennt, wobei in der Begrenzungswand (24) zumindest eine gaspermeable Gehäusemembran (27) angeordnet ist und wobei die Membran (3) mit der Zentralmembran (19) und/oder der Gehäusemembran (27) in einer funktionstechnischen Parallelschaltung angeordnet ist.
